# EUROPEAN PATENT APPLICATION

(11) **EP 2 070 426 A2**
(43) Date of publication of application: **17.06.2009**
(21) Application number: 08171009.7
(22) Date of filing: 08.12.2008
(51) Int. Cl.: A23K 1/14, A23K 1/18

(54) **Improved Animal Feedstuff for Ruminants**

(30) Priority: 07.12.2007 GB 0723969
(71) Applicant: The Glenside Group Limited, Throsk Stirling FK7 7XY (GB)
(72) Inventor: Robertson, James Ian Alexander, Stirlingshire Scotland, FX8 3JN (GB)
(74) Representative: Allan, James Stewart

(57) **Abstract**

The use of seaweed to improve uptake and utilisation of nutrients by an animal is disclosed. Further, the present invention relates to the use of seaweed meal to reduce excess mineral secretion in animal waste.

## Description

### Field of Invention

The present invention relates to animal feed, in particular for ruminants.

### Background to the invention

Unlike monogastric human digestion, the ruminant stomach has a plurality of compartments. One of these, the rumen, contains a large population of microorganisms (including bacteria, fungi and protozoa), on which ruminant digestion is heavily dependent. Following mastication of food in the mouth, the food bolus passes to the reticulum, which enables regurgitation of food back to the mouth for further mastication and mechanical breakdown in a process known as rumination. Subsequent to this, the food bolus passes into the rumen where microorganisms breakdown and absorb the majority of the food. For example, plant carbohydrates are degraded by cellulolytic rumen microorganisms into volatile fatty acids, (e.g. acetate, propionate and butyrate), lactate, carbon dioxide, methane and hydrogen.

Many of the breakdown products, e.g. volatile fatty acids, are used by the animal and pass directly through the rumen wall into the portal blood.
A trade off exists between degradation and absorption of intake carbohydrates and proteins in the rumen and degradation and absorption of intake carbohydrates and proteins lower down the digestive tract.

This balance is important to maximise the potential contribution of the microorganisms through their multiplication and growth in the rumen generating degradation products in the rumen and supplying high grade microbial mass for downstream absorption in the digestive tract. There is a limit to the potential contribution from microbial growth and reproduction based on (1) the speed of transport of degradation products through the rumen wall, preventing a fall in rumen pH with toxic accumulation of degradation products in the rumen and (2) the rate of sequestration of soluble nitrogen from the rumen environment. High concentration of rumen ammonia is toxic to both the microbes and the host animal and consequently there are limits to the intake of rumen degradable protein. Any disturbance of the optimal balance may lead to reduced nutrient absorption by the animal, impaired animal health, decreased animal productivity and lower growth rates.

An increase in digestible nutrients is required by animals during periods of growth and during lactation. Typically with captive livestock, in order to increase the amount of nutrients available to be absorbed by the ruminant host, sources of by-pass product, e.g. proteins, carbohydrates and minerals, are added to the feed. By-pass product refers to feed which demonstrates a resistance to breakdown by microorganisms in the rumen, instead passing through to the remaining stomach compartments and the small intestine, where nutrients can be absorbed more readily with greater efficiency.

Traditionally, by-pass protein and by-pass carbohydrates have been administered simply by increasing the total amount of protein or carbohydrate included in the feed mix. However, such a method of feeding leads to imbalances in the digestive environment of the rumen. For example, by increasing the amount of feed mix administered to the animal in order to create a by-pass effect, the amount of ruminally digestible starch or sugar within the rumen increases. This can result in increased acid due to bacterial breakdown. Increasing rumen acid levels beyond the natural buffering capacity of the rumen environment may result in rumen acidosis, a state which is toxic to cellulolytic microorganisms, and this will lead to an overall decrease in digestive efficiency.

Liquid feeding is one method of delivering by-pass nutrients. Calves have a reflex action when suckling that closes the oesophageal groove enabling milk to by-pass the rumen. Mature animals still retain some capability for diverting significant quantities of liquid past the rumen and this mechanism may be utilised e.g. by Choline supplementation, to by-pass rumen degradation, as disclosed in US patent application 2006/0073236.

Other conventional sources of by-pass product typically include feed supplements which have been chemically modified, e.g. supplements which have been lignified or chelated by the addition of metallic elements in order to render the supplements at least partially resistant to microbial degradation, and thus increase the proportion of the supplement which escapes rumen degradation.

Restricting feed available to rumen microorganisms in turn may affect the overall wellbeing of the animal. Indeed, the present inventors believe that the use of chemically modified supplements may contribute to a decrease in the overall digestive efficiency of the animal, which may lead to an imbalance in nutrient uptake, as well as general poor health and an increased susceptibility to opportunistic infections.

There is therefore a need in the art to provide feed products which can act as sources of by-pass proteins and carbohydrates, but which overcome some of the disadvantages of the prior art food supplements.

Seaweed is known to be a rich source of plant nutrients, particularly minerals. Historically, this led to seaweed being used as manure. Later, the growth of the alginate industry enabled the large scale production of seaweed meal, a dried form of seaweed, making this product commercially and widely available.

Research in the 1950s and 1960s demonstrated the utility of seaweed meal as a mineral supplement in animal husbandry.

### Summary of Invention

The inventors have surprisingly discovered that proteins and carbohydrates within seaweed meal exhibit a natural resistance to degradation and absorption by rumen microrganisms. As described in the Examples, it was found that, in the presence of seaweed meal, the amount of food which by-passes the rumen and is available for direct absorption by ruminants was significantly enhanced, suggesting that seaweed meal acts as a highly effective source of by-pass protein and/or by-pass carbohydrates. This increased by-pass effect enables increased nutrient uptake by the animal, which has numerous benefits and downstream advantages. Typically the enhancement of nutrient uptake occurs in the small intestine or in the stomach.

Moreover, it has been found that seaweed meal does not adversely affect the efficiency of the ruminant digestive microorganisms, in contrast to conventional by-pass products. This surprising and unexpected finding enables the use of seaweed meal as a source of by-pass protein and by-pass carbohydrate for ruminants.

Accordingly, in a first aspect, the present invention provides a method of enhancing nutrient uptake and/or utilisation in a ruminant, said method comprising orally administering seaweed meal to the ruminant. The seaweed meal can be administered alone or in a mix with other feed sources. In one embodiment, the seaweed meal is provided in a feed regimen with animal feed. For example a predetermined amount of seaweed meal may be mixed with animal feed and the mix orally administered to the ruminant. In one embodiment, the seaweed meal is administered in a feeding regimen which does not include artificial feed supplements, in particular, chelated or lignified mineral supplements.

In a second aspect of the invention, the present invention provides a non-therapeutic use of seaweed meal as a source of by-pass protein and/or by-pass carbohydrate to improve the efficiency of nutrient uptake and/or utilisation by the ruminant.

The demonstration that seaweed meal increases the efficiency of nutrient uptake, in particular of by-pass protein and carbohydrate, enables its use to enhance milk production (lactation) in ruminants. Accordingly, in a third aspect, the present invention provides a method of enhancing milk production by a ruminant, said method comprising orally administering seaweed meal to said ruminant.

In accordance with a fourth aspect, the present invention provides the non-therapeutic use of seaweed meal to enhance milk production in a ruminant. Enhanced milk production may be measured by any suitable means, for example, it may be assessed as (i) an increase in milk volume produced per day, (ii) an increased milk volume per Kg of feed given to the ruminant, (iii) increased lactation lifespan, and/or (iv) an increase in milk quality, for example increased milk protein concentration, increased butter fat and/or increased mineral content. Enhanced milk production may be measured with respect to control animals to which seaweed meal is not fed or, indeed, animals prior to application of a feeding regime including seaweed meal.

Indeed, in a fifth aspect, the present invention provides a method of extending the lactation lifespan of a ruminant comprising orally administering seaweed meal to the ruminant. In a sixth aspect of the invention, the present invention provides the non-therapeutic use of seaweed meal to extend the lactation lifespan of a ruminant. The lactation lifespan relates to the amount of time during the lifetime of the ruminant in which the ruminant can produce milk.

The demonstration that seaweed meal enhances nutrient uptake and utilisation enables its use to increase ruminant animal production. Accordingly, in a seventh aspect, the present invention provides a method of increasing animal production, e.g. increasing animal growth and/or meat production, comprising orally administering seaweed meal to the ruminant. Increased animal production may be assessed by comparing an animal which has been fed with conventional feed supplements with an animal which has been fed seaweed meal or a diet comprising or supplemented with seaweed meal.

In an eighth aspect of the invention, the present invention provides the non-therapeutic use of seaweed meal to increase animal production, e.g. to increase growth and meat production, in a ruminant.

The improved nutrient balance observed when using the food regimes and methods of the invention is expected to enhance fertility and longevity in the ruminants. Accordingly, in a ninth aspect of the invention, the present invention provides a method of increasing fertility rates and/or longevity of a ruminant comprising orally administering seaweed meal to the ruminant. In a tenth aspect of the invention, the invention provides the non-therapeutic use of seaweed meal to increase the fertility rate and/or longevity of a ruminant. Fertility rates relate to the number of offspring produced by the ruminant during the lifespan of the ruminant. Longevity relates to an increased lifespan of the ruminant.

In an eleventh aspect of the invention, the present invention provides the use of seaweed meal as a source of by-pass protein and/or by-pass carbohydrate without any additional risk of causing or increasing the incidence of rumen acidosis.

The inventors have also surprisingly discovered that, by combining seaweed meal with alfalfa, the above noted effects are significantly enhanced in a synergistic and most unexpected manner. Additionally, the present inventors have surprisingly discovered that alfalfa not only provides a bypass effect but also acts as a source of readily digestible protein without high gas production resulting in mitigation of acidosis. Thus, in one embodiment, in any of the above aspects of the invention, the seaweed meal is provided in a feeding regimen along with alfalfa.

Accordingly, in a twelfth aspect of the invention, the present invention provides a feedstuff for use in feeding a ruminant, said feedstuff comprising seaweed meal and alfalfa composition.

In certain embodiments, the feedstuff may comprise seaweed meal or a byproduct thereof in an amount of between 10 to 90% of the total weight composition of the feedstuff, while alfalfa may be present in the feedstuff in an amount of between 90 to 10% of the total weight composition of the feedstuff.

In a thirteenth aspect of the invention, the present invention provides
a method of enhancing nutrient uptake and/or utilisation in a ruminant, said method comprising orally administering seaweed meal and alfalfa to the ruminant. The seaweed meal and alfalfa may be administered separately, sequentially or simultaneously. For example in one embodiment the seaweed meal may be administered as an admixture or a composition. Where an admixture is used, the seaweed meal and alfalfa may be administered sequentially, simultaneously or separately, wherein simultaneous or separate administration can have the seaweed meal and alfalfa administered in any order..

As used herein, the term composition is intended to mean a feedstuff, such as a feedstuff for a ruminant which comprises an alfalfa and seaweed meal combination.

In one embodiment, the seaweed meal and alfalfa are provided in a feed regimen with other known animal feed. For example a predetermined amount of seaweed meal and alfalfa admixture or composition may be mixed with animal feed and the mix orally administered to the ruminant. In one embodiment, the seaweed meal and alfalfa is administered in a feeding regimen which does not include artificial feed supplements, for example, chelated or lignified mineral supplements.

In a fourteenth aspect of the invention, the present invention provides a non-therapeutic use of seaweed meal and alfalfa as sources of by-pass protein and/or by-pass carbohydrate to improve the efficiency of nutrient uptake and/or utilisation by the ruminant.

In a fifthteenth aspect, the present invention provides a method of enhancing milk production by a ruminant, said method comprising orally administering seaweed meal and alfalfa separately, sequentially or simultaneously to said ruminant.

In accordance with a sixteenth aspect, the present invention provides the non-therapeutic use of seaweed meal and alfalfa to enhance milk production in a ruminant.

Indeed, in a seventeenth aspect, the present invention provides a method of extending the lactation lifespan of a ruminant comprising orally administering seaweed meal and alfalfa separately, sequentially or simultaneously to the ruminant. In a nineteenth aspect of the invention, the present invention provides the non-therapeutic use of seaweed meal and alfalfa to extend the lactation lifespan of a ruminant.

In a nineteenth aspect, the present invention provides a method of increasing animal production, e.g. increasing animal growth and/or meat production, said method comprising orally administering seaweed meal and alfalfa separately, sequentially or simultaneously to the ruminant.

In a twentieth aspect of the invention, the present invention provides the non-therapeutic use of seaweed meal and alfalfa to increase animal production e.g. to increase growth and meat production, in a ruminant.

In a twenty-first aspect of the invention, the present invention provides a method of increasing fertility rates and/or longevity of a ruminant comprising orally administering seaweed meal and alfalfa separately, sequentially or simultaneously to the ruminant. In a twenty-second aspect of the invention, the invention provides the non-therapeutic use of seaweed meal and alfalfa to increase the fertility rate and/or longevity of a ruminant.

In a twenty-third aspect of the invention, the present invention provides the use of seaweed meal and alfalfa as sources of by-pass protein and/or by-pass carbohydrate without any additional risk of causing or increasing the incidence of rumen acidosis.

### Brief description of the figures

Figure 1 represents the effect of seaweed meal on ruminant digestion of cellulose;
Figure 2 represents the effect of seaweed meal on ruminant digestion of maize starch;
Figure 3 represents the effect of seaweed meal on ruminant digestion of wheat starch;
Figure 4 is a degradation curve for seaweed meal carbohydrates;
Figure 5 is a degradation curve for seaweed meal protein;
Figure 6 is a degradation curve demonstrating the effect of seaweed meal gel on the degradation of carbohydrates and the effect of washing seaweed meal;
Figure 7 is a degradation curve demonstrating the effect of seaweed meal gel on the degradation of proteins and the effect of washing seaweed meal;
Figure 8 demonstrates the ability of seaweed meal to increase milk mineral content;
Figure 9 demonstrates the ability of seaweed meal to increase milk mineral content;
Figure 10 demonstrates the ability of seaweed meal to increase milk mineral content;
Figure 11 is a degradation curve demonstrating the degradation of soya bean meal in an in vitro rumen model;
Figure 12 is a degradation curve demonstrating the degradation of alfalfa in an in vitro rumen model;
Figure 13 is a graph of gas produced by soya bean meal in an in vitro rumen model;
Figure 14 is a graph of gas produced by alfalfa in an in vitro model;
Figure 15 demonstrates the ability of seaweed meal to increase milk mineral content.

### Detailed description of the Invention

As described above, the inventors have determined that seaweed meal provides a particularly efficient source of by-pass protein and by-pass carbohydrate and, as such, provides enhanced food absorption per kg of feed compared to conventional feed or feed supplements. The demonstration that seaweed meal exhibits a resistance to degradation by rumen microorganisms enables it to be used to by-pass the rumen and to reach sections of the stomach and small intestine where nutrients may then be absorbed to the benefit of the animal.

Moreover, in addition to increasing the efficiency of nutrient uptake in a ruminant from seaweed meal compared to conventional by-pass product food supplements, the use of seaweed meal confers further advantages over the use of conventional feed supplements.

Firstly, the inventors have found that imbalances in the stomach environment generated by feeding excess amounts of carbohydrates and protein, e.g. acidosis, are reduced when seaweed meal is used as a source of by-pass protein and/or by-pass carbohydrate. Use of seaweed meal has the advantage that it substantially prevents the generation of a rumen environment which is toxic to the microorganisms and yet does not substantially inhibit the rumen microorganisms which enables the maintenance of a healthy animal. In particular, celluloytic microorganisms, which breakdown cellulose into, *inter alia,* acids, for example, lactic acid, volatile fatty acids e.g. propionic acid, acetic acid and butyric, or other fermentation acids, required by the animal for growth and milk production, are sensitive to a rumen pH below pH6.2. A build up of fermentation acids occurs when excess carbohydrates, e.g. starch and sugars, are fed to the ruminant. Such an increase in fermentation acids in the rumen environment quickly reduces the rumen pH to below pH6.2, and has a detrimental effect on the efficiency of rumen digestion. However, the inventors have found that the products of the current invention may be used without any risk of increasing or causing acidosis in the ruminant

Additionally, the compositions, feeding regimes and methods of the present invention may be used to reduce or prevent acidosis in a ruminant.

Secondly, seaweed meal has been found to not depress the efficiency of the rumen microorganisms as is the case with chemically chelated and lignified products manufactured to act as a source of by-pass product. This lack of toxicity allows the rumen microorganisms to function more efficiently than in the presence of conventional sources of by-pass protein and by-pass carbohydrates.

When seaweed meal is used as a source of by-pass protein and/or by-pass carbohydrate, seaweed meal results in high nutrient absorption by the animal. This renders seaweed meal a highly efficient source of by-pass protein and by-pass carbohydrate. This efficiency facilitates greater nutrient absorption from seaweed meal compared to the nutrient uptake observed from the equivalent weight of conventional by-pass product.

Thirdly, the use of seaweed meal allows the ruminant to modify the partitioning between starches degraded quickly in the rumen, "fast starches", and starches degraded slowly in the rumen, "slow starches". Changes in partitioning can improve rumen digestion and/or increase the efficiency of feed utilisation.

For example, in a diet where there is a lack of quickly degradable material, acceleration of degradation may have some benefit as it increases the amount of degradation by rumen microorganisms in a given time frame, thus increasing both microbial mass and the amount of microbial degradation products which are absorbable by the animal, e.g. volatile fatty acids.

Additionally, a shift to slow degradation from quick degradation can also be of benefit when there is an excess of quickly degradable carbohydrate and protein as this shift causes a by-pass effect thereby increasing the amount of food directly absorbable by the animal lower down the digestive tract.

In situations of excess quickly degradable material, SARA (sub acute ruminal acidosis) may set in. Rumen pH falls inhibiting cellulolytic bacteria and the process of fibre digestion. A build up of undigested fibre depresses feed intake, thus alleviating symptoms. Cows increase water intake, thereby diluting the rumen acidity. A recognizable cyclical pattern of binge eating, indigestion and fasting ensues with alternating liquid and stiff faeces; liquid faeces due to increased water intake and lack of fibre content, stiff faeces due to high fibre content after fasting and ruminating mechanically reducing indigestible fibre by chewing and increasing pH with natural buffering in saliva raising the pH to encourage cellulolytic bacteria.
Accordingly, the current invention provides compositions, combinations, feed regimens and admixtures which can be administered orally without the associated risk of increasing or causing SARA.

Additionally, the compositions, feeding regimes and methods of the present invention may be used to reduce or prevent SARA in a ruminant.

The increased digestive efficiency observed with the use of seaweed meal as a source of by-pass protein and carbohydrate, i.e. increased nutrient uptake by the ruminant, the lack of a toxic microbial environment, removal of the depressive effect on rumen microorganisms observed with conventional artificial feed, partitioning and high nutrient bioavailability of seaweed meal, facilitates increased milk production and/or increased meat production. Overall animal health may also be improved due to the improved nutrition of the animal.

Increased milk quality is also observed when using seaweed meal. A desired milk protein level is approximately at least 3.2%, 3.5% being exceptionally good. When using conventional methods, increasing milk volume can have a diluting effect thereby decreasing milk protein levels from approximately 3.2% to a poor level of approximately 2.7%. It has been found that using seaweed meal in the diet of milk producing ruminants may increase the milk protein concentration as well as increasing milk volume.

Additionally, the inventors have found that when seaweed meal is employed in accordance with the invention, the mineral content of the milk is greatly increased, for some minerals by an amount greater than would be expected taking into account the mineral content of seaweed meal. For example, copper levels in milk measured from an animal before and after administration of seaweed meal to the animal shows an increase in milk copper levels after administration of seaweed meal, which exceeds the amount of copper administered to the animal in the form of seaweed. Seaweed meal therefore results in a synergistic effect enhancing nutrient uptake not only from seaweed meal but also from other feed administered to the animal.

Further, the improved animal wellbeing resulting from the use of seaweed meal may also result in an increase in the lactation lifespan of a ruminant, i.e. lactation may occur for longer periods and/or more frequently during the lifetime of the ruminant, e.g. due to improved fertility and more calvings. For example, conventionally fed cattle may have a lactation lifespan of approximately 2 to 3 years, during which time the cow will be milked for approximately 16 months. The lactation lifespan of ruminants, e.g. dairy cattle, is generally limited due to infections, infertility etc, which the inventors believe, without being bound by any one particular theory, are attributable to the effectiveness of immune systems being adversely affected by poor nutrient utilisation. Particular problems are believed to arise from the use of artificially chelated feed supplements. As described herein, using seaweed meal leads to increased nutrient uptake by the animal which reduces the incidence of such problems. Improved nutritional status may lead to an increased time period over which the ruminant can lactate and produce offspring. In the instance of a dairy cow, the use of seaweed meal as a source of by-pass protein and or by-pass carbohydrates may lead to the lactating lifespan of the dairy cow being increased from 2 to 3 years to up to ten years. Increasing the lactation lifespan of the animal is also of importance as on average, the quality of the third and subsequent lactation periods, following third and subsequent calvings, results in better milk yields from the animal compared to the milk yield produced during the lactation periods following the first and second calvings of an animal.

Seaweed meal also increases fertility rates. Without being bound by any particular theory, the inventors believe that seaweed meal acts on the fertility rate of the animal as increased nutrition brings the animal into a more demonstrable season, thereby enhancing the effectiveness of insemination procedures, increasing both conception rates and the retention of embryos.

Accordingly, the invention also provides a method of increasing conception rates in ruminants, said method comprising supplementing the ruminant's diet with seaweed meal.

Additionally, the present inventors have surprisingly found that seaweed meal not only has all the above noted benefits, the use of seaweed meal as a ruminant mineral source reduces the amount of minerals secreted by the animal into the environment in faecal matter and urine. Thus, the use of seaweed meal may be used to reduce environmental mineral toxicity, e.g. soil toxicity, which can be damaging to plant and animal life.

Further, the use of seaweed meal enables the more effective extraction and utilisation of minerals from the rest of the ration or feed provided to the animal.

### Seaweed

References herein to "seaweed meal" refer to any seaweed containing foodstuff, including seaweed itself, or a seaweed by-product. The seaweed may be processed e.g. by drying and grinding to form a seaweed meal product. It may be mixed with other nutrients or mixed with conventionally used animal feedstuffs or feed mixes. Conventionally used feed mixes may include, but are not limited to, any of the following: maize, wheat, cellulose, barley, wholecrop and grass silages, grasses, soya, gluten and human foodstuffs such as bread and biscuit meal, and any distillate or other byproduct produced by the distillation and/or brewing or the like of maize, wheat, cellulose, barley, wholecrop and grass silages, grasses, soya, gluten and human foodstuffs such as bread and biscuit meal.

Any suitable variety of seaweed may be used. Preferred seaweed species for use in the invention are those seaweed species capable of growth in the mid shore line; such species receive UV light exposure and regular washings with seawater. In one embodiment the seaweed used is brown seaweed from the Phylum Chromophycota, for example, from Class Phaeophyceae. In one embodiment, the species used are those found in the waters of the North Atlantic, Tasmanian and Falkland Island coastlines, for example, *Ascophyllum* species, e.g. *Ascophyllum nodosum,* or *Fucus species,* e.g *Fucus vesiculosus.*

Milling the dried seaweed produces a seaweed meal product, the particle sizes of which may vary, with specific particle sizes being selected by methods known in the art.

In using seaweed meal in accordance with the invention, it will be appreciated that the exact amount of seaweed meal used can be tailored to suit the specific needs of the animal. Additionally, the mix of feed and seaweed meal can similarly be adapted and may be provided separately without animal feed or mixed therewith. The seaweed meal may be administered in the absence of any artificial feed supplements, e.g. artificially chelated or lignified feed supplements. Seaweed meal may be added to any food source or mix generally available and suitable for use in ruminants. Seaweed meal may for example be added to food as a powder or as a gel. When used as a gel, the seaweed meal may be sprayed onto the feed prior to administration to the animal.

Typical seaweed meal contains approximately 7% protein and approximately 55 to 60% carbohydrates. A typical feeding regime will vary depending on the weight, age and expected output for that animal, for example the expected milk yield or expected meat production and/or growth rate.

Typically approximately 100 to 250g/day of seaweed meal may be administered to dairy cows. For calves and beef cows, the amount to be administered may depend on weight. Typically the equivalent of 0.05% of the calf body weight may be administered per day, increasing to 0.1% during times of stress, e.g. fast growth periods, during pregnancy and lactation or during illness. For beef cattle, 75-150g may be administered per day, with levels increasing within this range during calving. The amount of seaweed meal to administer may also be calculated based on the total feed intake of the animal per day; for example, 150g to 250g of seaweed meal per 20Kg of dry matter food eaten by the animal.

Amounts of seaweed meal administered to the ruminant may also be increased during times of animal stress, e.g. periods of rapid growth and during pregnancy. An analysis of the contents of seaweed meal is provided in table 1 below.

For example, for the average dairy cow, the amount of seaweed meal to be administered per day will depend upon the current milk output of the animal; e.g. for a cow producing 5500-7000L of milk, 120-150g of seaweed meal per day may be administered.

The present invention may be used with any rumen containing animal , e.g. ruminants such as cattle, goats, sheep and camels, alpacas, llamas, horses and deer, but is not limited to ruminants and can be fed to monogastrics and other animals e.g. pigs, poultry and aquatic species.

In the current application, the term runimant includes any animal containing a rumen.

### Alfalfa

Alfalfa, also known as Lucerne or lucerne grass, is a flowering plant of the pea family *Fabaceae* cultivated as an important forage crop. Any alfalfa species may be used in the admixtures, foodstuffs compositions and methods of the present invention. In one embodiment, *Medicago sativa* is the alfalfa species used in the present invention.

The effects of seaweed meal may be synergistically enhanced by administering seaweed meal along with alfalfa. Typically, a composition comprising both seaweed meal and alfalfa is administered. Alfalfa and seaweed meal may be administered with conventional feed either at the same time or sequentially. Admixtures of alfalfa and seaweed meal may also be used. Preferably, dried alfalfa extract is added to seaweed meal, although other forms of alfalfa may be utilized in the present invention. By administering both alfalfa and seaweed meal to the animal, protein feed levels are increased with high quality protein which also provides a by-pass effect. Surprisingly an increase in rumen digestible protein without high gas production due to carbohydrate breakdown, is also observed in the rumen model assessment of alfalfa.

By administering both seaweed meal and alfalfa to the ruminant, the benefits associated with administration of seaweed meal are enhanced by increasing the amount of high quality protein available to the animal. Furthermore, administration of alfalfa enhances vitamin E levels.

The amount of alfalfa administered to each animal varies depending on the feeding rate, animal size and milk output of the animal. Typically the admixture or composition comprises at least 5, 10, 15, 20, 25, 30, 35, 40, 45, 50, 55, 60, 65, 70, 75, 80, 85, 90 or 95% by weight seaweed meal. The admixture or composition may comprise at least 5, 10, 15, 20, 25, 30, 35, 40, 45, 50, 55, 60, 65, 70, 75, 80, 85, 90 or 95% by weight alfalfa. Typical compositions and admixtures of seaweed meal and alfalfa are as follows:

| % by weight seaweed meal | % by weight alfalfa | Typical analysis of protein (% of total sdry matter [DM]) |
|---|---|---|
| 92.5 | 7.5 | 9.7 |
| 91 | 9 | 10 |
| 85 | 8.5 | 12.5 |
| 78 | 22 | 15.5 |
| 70 | 30 | 20.24 |
| 60 | 40 | 24.9 |
| 50 | 50 | 29.6 |

The present invention will now be described with reference to the following examples which are provided for the purpose of illustration and are not intended to be construed as being limiting on the present invention.

### EXAMPLES

### Example 1

Rumen liquor was used to assess the effect of seaweed meal on the speed and efficiency of rumen digestion as a function of rumen microbial function. Rumen liquor, harvested from a freshly culled sheep was filtered and microrganism numbers standardised. Typically, rumen liquor was supplemented with nitrogen sources and ammonia in order to ensure degradation is limited solely by the amount of feed substrate. 50mg of seaweed meal, either in the form of Hebridean seaweed meal or Seaquim^{™} Elite Seaweed Meal was added per 220mg of cellulose, maize starch or wheat starch in the presence and absence of artificial mineral sources.

Seaquim^{™} Elite Seaweed Meal and Hebridean Seaweed Meal represent two different seaweed meal products, differing by the inclusion of different particle sizes. In Seaquim^{™} Elite, fine or dust particles have been removed from the milled seaweed meal. In Hebridean Seaweed Meal, the fine particles have not been removed, leading to a product with a more diverse particle range.

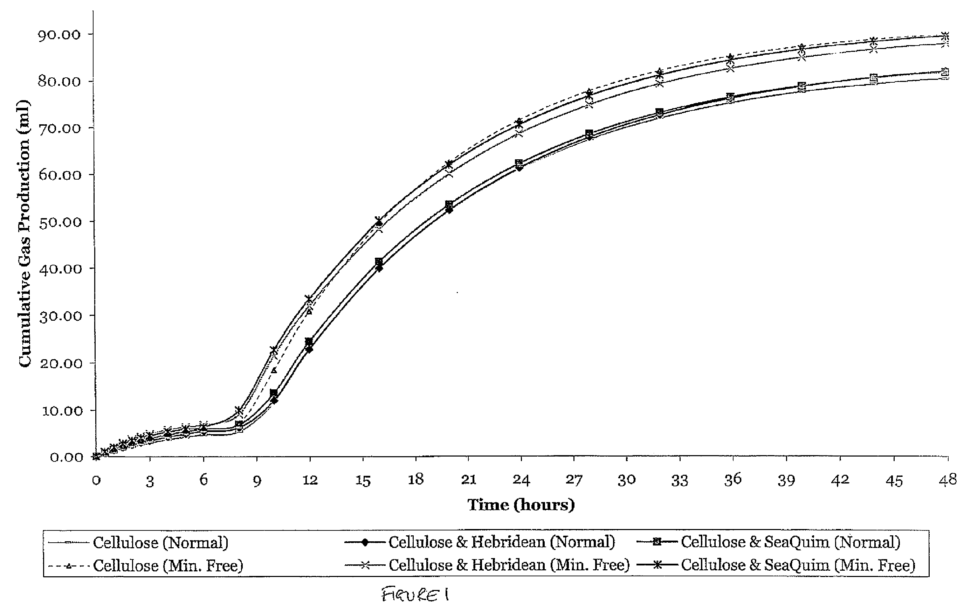

The total amount of gas generated as a by-product of microbial degradation was measured over a 48 hour period. Measurements were taken every 30 minutes in the initial phases of the process. As demonstrated in Figure 1, cumulative gas production generated from cellulose degradation increased in the absence of artificial mineral sources (artificial mineral sources here providing a source of nitrogen and ammonia), signifying a removal of the depressive effect resultant from using artificially chelated or lignified products.

When seaweed meal (Seaquim or Hebridean) was degraded in the absence of artificial mineral sources, enhanced rumen efficiency was observed compared the level of degradation observed for seaweed meal in the presence of artificial mineral sources. As demonstrated in Figure 1, after 48 hours, cellulose subjected to the rumen degradation model produced approximately 9ml less gas in the presence of artificial minerals (marked on Figure 1 as Cellulose (normal)), compared to gas produced in the absence of artificial mineral sources (marked on Figure 1 as cellulose (min. free)).

Degradation of cellulose in the presence of Seaquim and artificial mineral sources produced approximately 8ml less gas by the end of 48 hours, compared to Seaquim plus cellulose in the absence of artificial mineral supplements.

Similarly, when Hebridean seaweed meal was used, cellulose degradation in the absence of artificial mineral supplements produced approximately 7ml more gas by the end of the 48 hour period compared to the cellulose, Hebridean seaweed meal and artificial mineral supplements sample.

Figure 1 data therefore demonstrates the ability of seaweed meal to improve rumen microorganism efficiency in the absence of artificial mineral supplements compared to the presence of such artificial mineral sources. Figure 1 data also demonstrates that seaweed meal does not adversely affect rumen microorganisms.

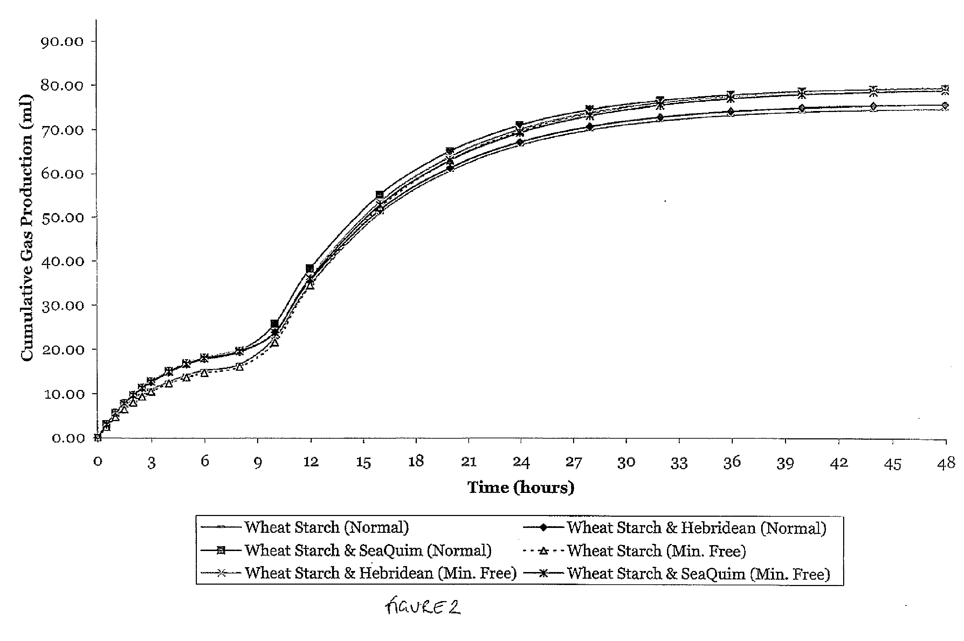

In Figure 2 wheat starch was tested in the presence and absence of mineral supplements and seaweed meal. In Figure 2, after 48 hours, wheat starch in the presence of artifical mineral supplements produced approximately 7ml less gas compared to wheat starch degraded in the absence of artificial mineral supplements. Wheat starch plus artificial minerals and Hebridean seaweed meal produced approximately 3ml less gas compared wheat starch and Hebridean seaweed degraded in the absence of artificial minerals.

Figure 2 data therefore demonstrates that seaweed meal does not impair the ability of rumen microorganisms to degrade wheat starch and further demonstrates that artificial mineral sources depress microorganisms present in the rumen.

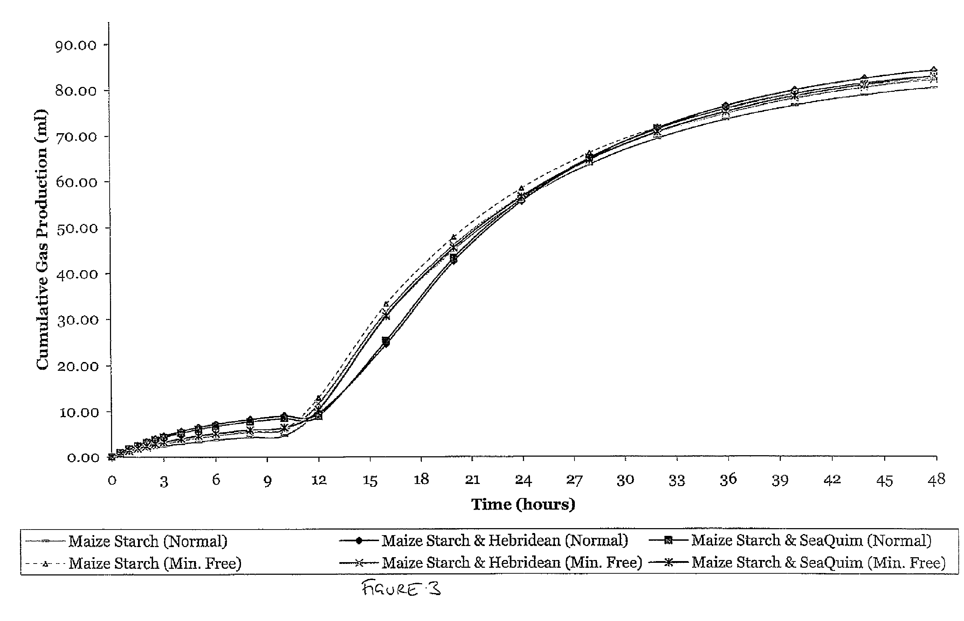

The effect of seaweed meal on maize starch was then investigated, repeating the experiments of Figures 1 and 2 in cellulose and wheat starch. The results are shown in Figure 3.

In the absence of artificial minerals, degradation of maize starch generated approximately 4ml more gas, compared to the equivalent sample including artificial mineral supplements. By the end of 48 hours, Hebridean seaweed meal plus maize starch and artificial minerals generated approximately 2ml more gas than in the absence of artificial mineral supplements, although between the 12 to the 24 hour time points, the absence of artificial mineral supplements and the presence of Hebridean seaweed meal produced significantly more gas than Hebridean samples containing artificial supplements. The inclusion of Seaquim resulted in equivalent gas production from maize starch degraded in the presence and absence of artificial mineral supplements, although as with the use of Hebridean seaweed, between the 12 to 24 hour time points, the absence of artificial minerals in the presence of Seaquim resulted in increased gas production

Thus in summary, an increase in the utilisation of carbohydrates is observed in the absence of artificial mineral sources and in the presence of seaweed meal.

It will be appreciated by those skilled in the art, that more than 1ml increase in gas production generated from 220mg of feed over a 48 hour period would be considered to represent a significant improvement of rumen microbial efficiency and rumen digestive function.

### Example 2

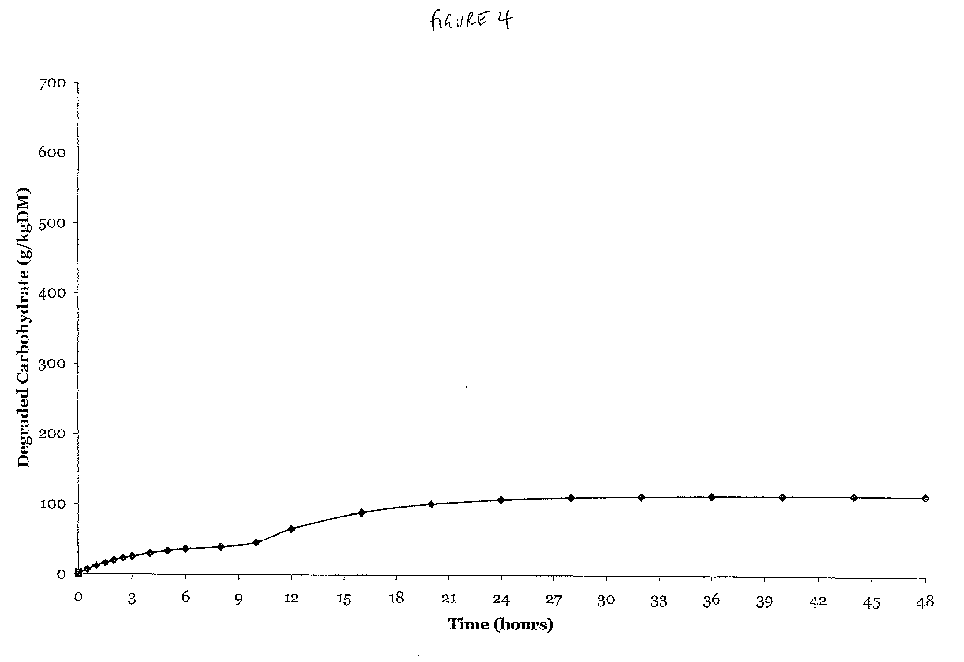

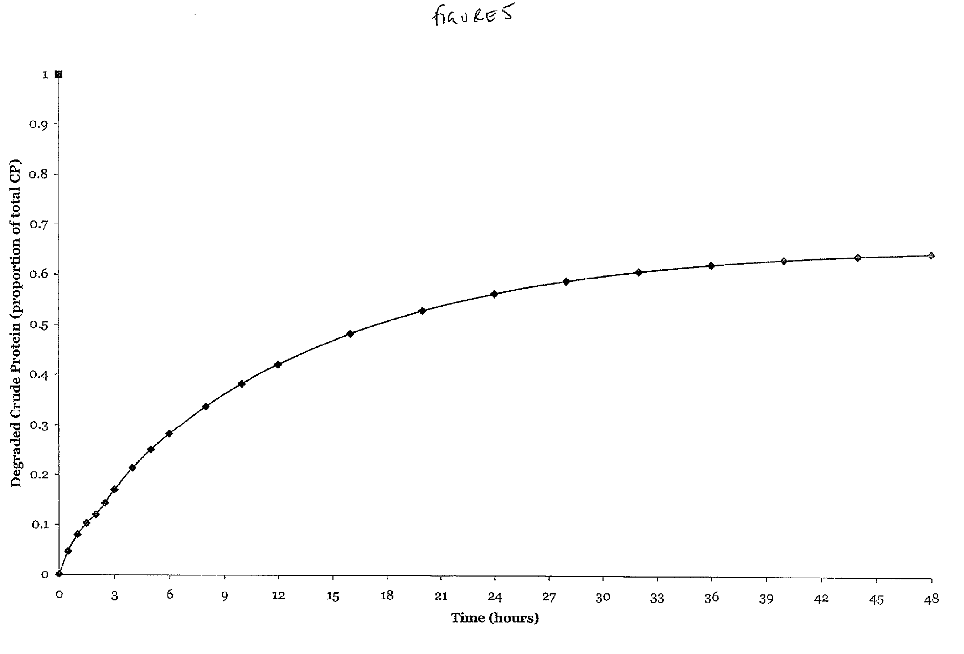

The ability of seaweed meal to resist degradation by rumen microorganisms was assessed, and the resultant data is presented in Figures 4 and 5. As in example 1, standardised rumen liquor was utilised in the absence of artificial minerals. The amount of non-degraded seaweed meal product was measured over a 48 hour time period. For protein studies, 0.1875mg of crude protein was supplemented with 0.03mg of nitrogen.

Figure 4 demonstrates the degradation of Hebridean seaweed meal carbohydrate in rumen liquor over a 48 hour period. As can be seen from Figure 4, after 36 hours, only approximately 114g/kg of carbohydrate had been degraded, with this figure not rising significantly by the end of the 48 hour time period. This corresponds to approximately 11% of the seaweed meal carbohydrate being degraded. In contrast, for conventional feed (e.g. feed not acting as a source of by-pass protein, for crimped wheat approximately 65% of the crimped wheat would be expected to be degraded (data not shown).

Figure 5 illustrates, in percentage terms, Hebridean seaweed meal protein degraded in rumen liquor during a 48 hour time period using the rumen simulation model described above. By 48 hours approximately 60 percent of the total protein had been degraded. In contrast, for conventional feed (i.e. feed not acting as by-pass product, for example palm kernel meal, soya bean meal over 80% protein degradation would be expected (data not shown).

### Example 3

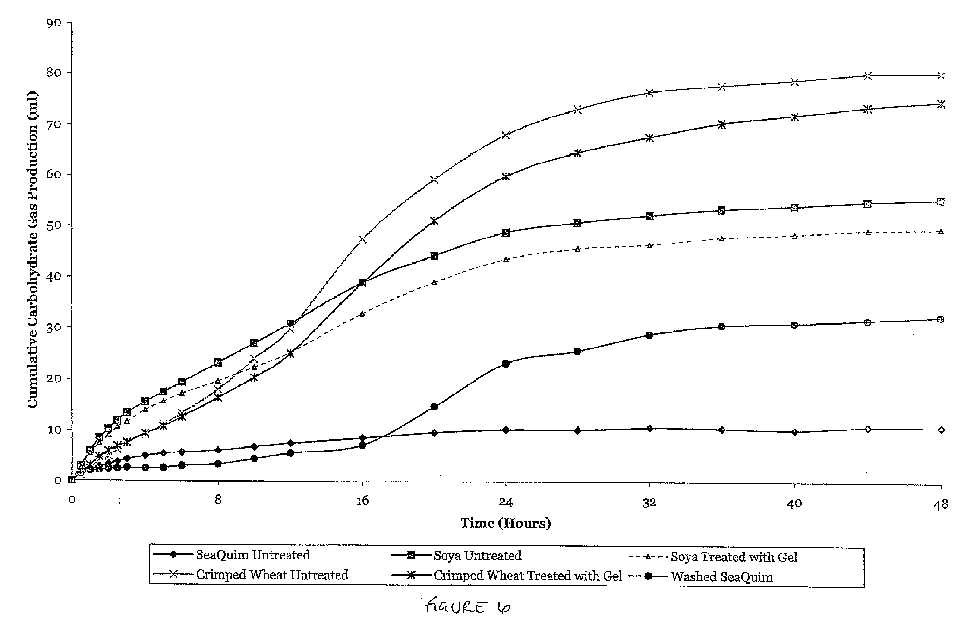

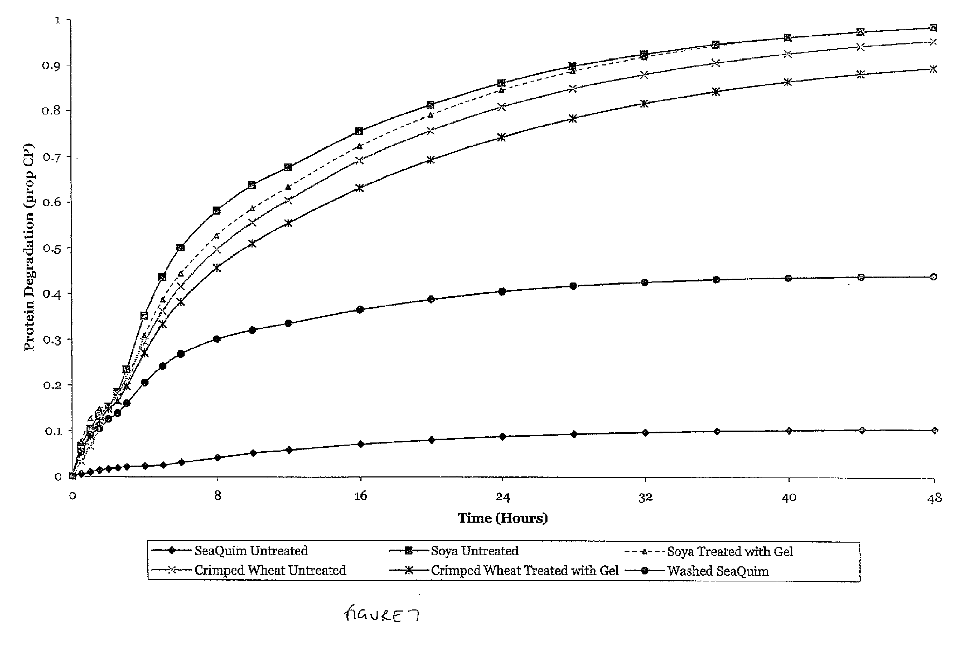

Figures 6 and 7 demonstrate the ability of seaweed meal proteins and seaweed meal carbohydrates to resist degradation in the rumen. Figures 6 and 7 also demonstrate that the use of seaweed meal gel sprayed onto soya and crimped wheat increased the resistance of soya and crimped wheat to degradation in the rumen.

The effect of washing Seaquim^{™} Elite on the degradability of protein and carbohydrates in soya and crimped wheat protein mixed with Seaquim^{™} Elite was also investigated.

As can be seen in Figures 6 and 7, Seaquim^{™} Elite protein and carbohydrate demonstrated a significant resistance to rumen degradation. Figure 6 demonstrates that washing Seaquim^{™} Elite resulted in a decrease in carbohydrate degradation in the first 16 hours of analysis compared to unwashed Seaquim^{™} Elite, representing an increase in the resistance of washed Seaquim^{™} Elite to degradation.

Post 16 hours, gas production increased, representing an increase in the digestibility of washed Seaquim^{™} Elite. However, washed Seaquim^{™} Elite carbohydrate remained more resistant to breakdown in the rumen than soya or crimped wheat.

In Figure 7, the effects of washing relative to protein degradation are shown. The use of washed Seaquim^{™} Elite greatly increased the digestibility of seaweed proteins. However, washed Seaquim^{™} Elite protein remained more resistant to breakdown in the rumen than soya or crimped wheat alone.

Figures 6 and 7 also demonstrate the increased by-pass effect observed with the use of seaweed meal gel sprayed onto crimped wheat and soya to a concentration of 8.7%. Both protein degradation and carbohydrate degradation are decreased relative to the degradation levels seen with untreated crimped wheat and soya. The data therefore demonstrates that seaweed meal may be used effectively in a gel form and that seaweed meal enhances resistance to degradation of different carbohydrates and proteins in foodstuffs.

The above data demonstrates the ability of seaweed meal protein and carbohydrates to substantially resist degradation and breakdown by rumen microrganisms. This ability allows seaweed meal to act as a source of by-pass protein and/or bypass carbohydrate in ruminants.

### Example 4

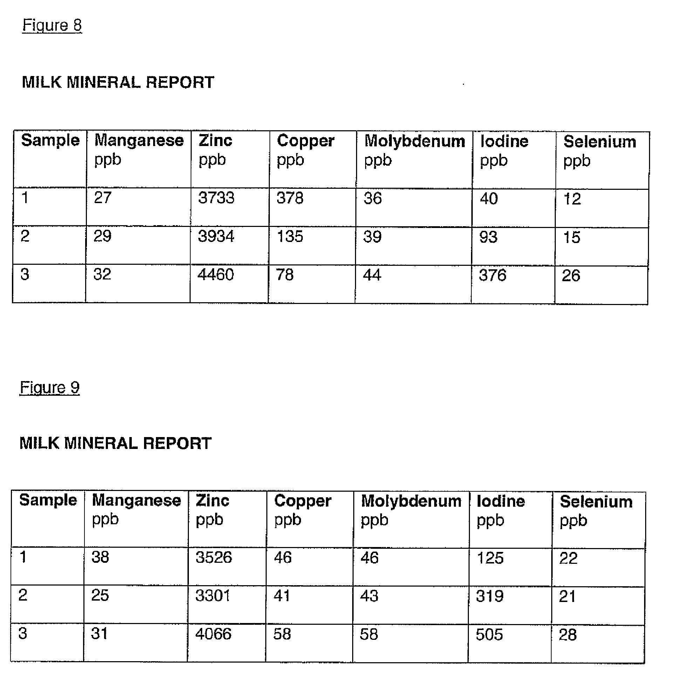

Figures 8 and 9 demonstrate the ability of seaweed meal to increase milk trace mineral concentrations. In both sets of data, the quantities measured in parts per billion for manganese, zinc, copper, selenium, iodine and molybdenum were assessed prior to administration of seaweed meal and the values are shown as sample 1. 200g of seaweed meal was administered daily per animal mixed in with the total mixed rations. Samples 2 and 3 show the milk concentration of these minerals approximately one and two months after the administration of seaweed meal began. Bulk milk taken from the whole herd was assessed. For Figure 8 data, the bulk milk was a pool of milk taken from a herd of 350 Jersey cattle. In Figure 9 data, the bulk milk was a pool of milk taken from 180 Holstein cattle.

In Figure 8 the concentration in parts per billion of all minerals with the exception of copper increased significantly over the two month period. The progressive rise in selenium concentration is of particular importance, milk selenium levels being associated with improved udder health in cattle.

The exceptionally high copper value in sample 1, prior to the use of seaweed meal is the effect of injecting cattle with artificial copper supplements. This common practice involves the use of periodic copper injections which results in milk copper levels fluctuating between very high levels and very low levels. High copper levels are capable of causing toxicity in cattle. Low copper levels are associated with cattle with an increased susceptibility to mastitis, poor fertility e.g. returns to service and lower milk yields. The use of seaweed meal over the two month period resulted in the normalisation of copper levels within optimum levels without the need to administer artificial supplements and risking the associated toxicity and instability of milk copper levels.

The data in Figure 9 again shows the ability of seaweed meal to increase trace mineral concentrations in milk from cattle. Bulk milk taken from the herd was again assessed before and after feeding of seaweed meal, as explained for Figure 8. Again, increased selenium levels were observed. Additionally, copper levels significantly increased from 46 ppb to 58 ppb by the end of the two month period.

The initial slight decrease in manganese levels in sample 2 are believed to be associated with low levels of manganese in the total mixed rations. The continued use of seaweed meal did however increase manganese levels by the end of the experiment.

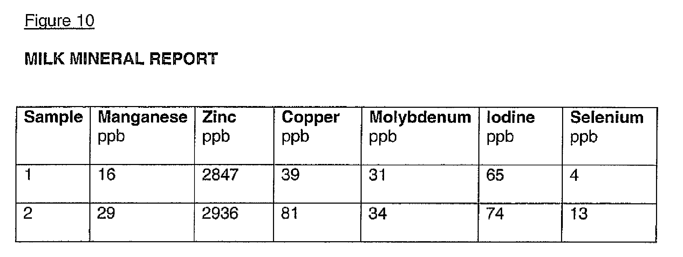

Figure 10 further demonstrates the ability of seaweed meal to increase milk trace mineral concentrations by improving the animals' ability to absorb minerals in the diet. In Figure 10, sample 1 relates to milk mineral concentrations prior to administration of 200mg of seaweed meal per animal per day mixed in with total mixed rations. Trace mineral concentrations in milk samples taken approximately one month after administration of seaweed meal began are shown in sample 2. As in Figures 8 and 9, bulk milk was assessed, the herd assessed in figure 10 including 120 cattle. Mineral concentrations of all 6 minerals increased over the course of the experiment illustrating the ability of seaweed meal to increase milk mineral concentrations.

### Example 5

Using the rumen model discussed above, rumen liquor was used to assess the degradability of alfalfa extract compared to soya bean meal.

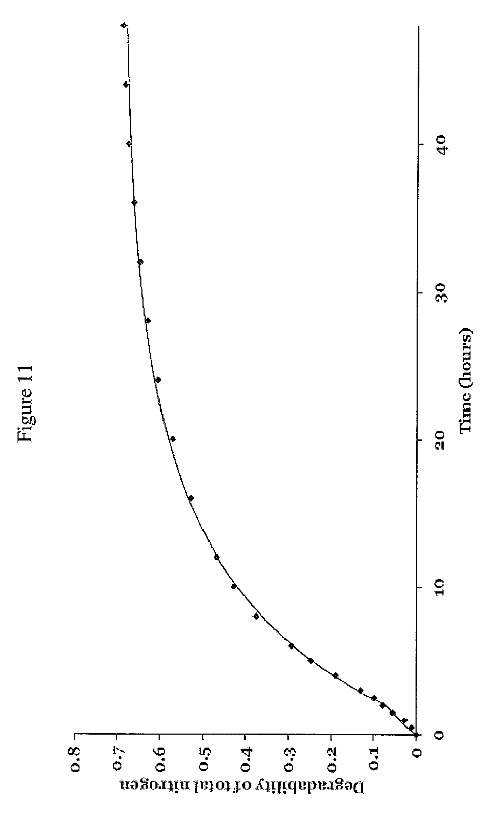

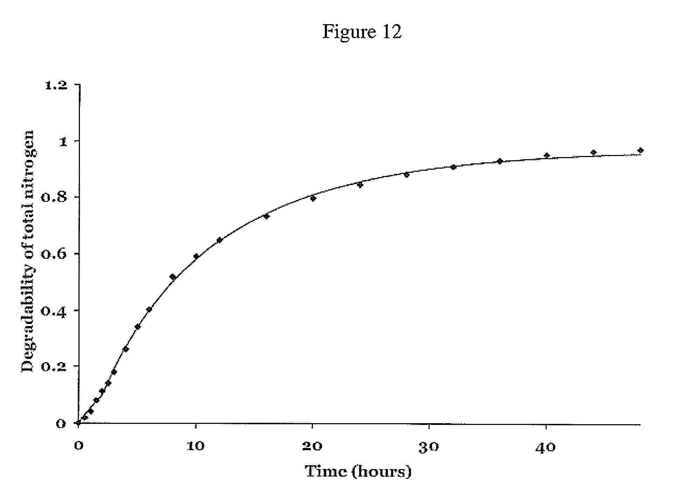

The amount of degraded nitrogen was measured to assess the level of degraded protein and the results are shown in figures 11 and 12. The data demonstrates that alfalfa provides a source of protein which is readily available for degradation and is more available for degradation than soya bean meal protein.

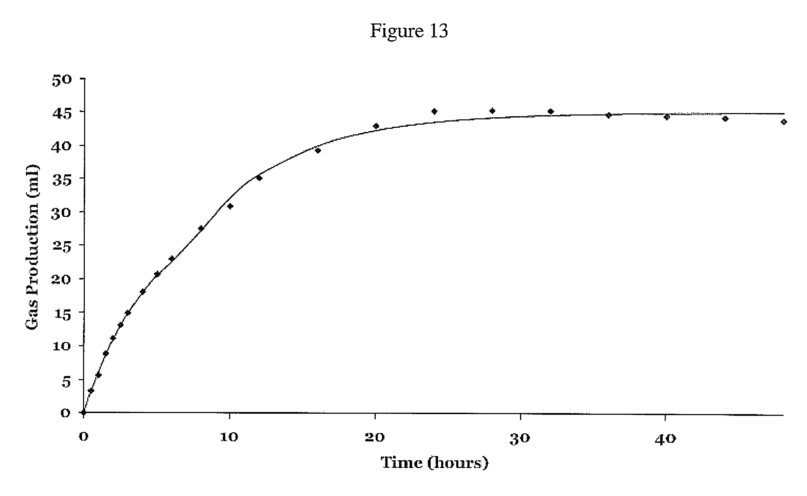

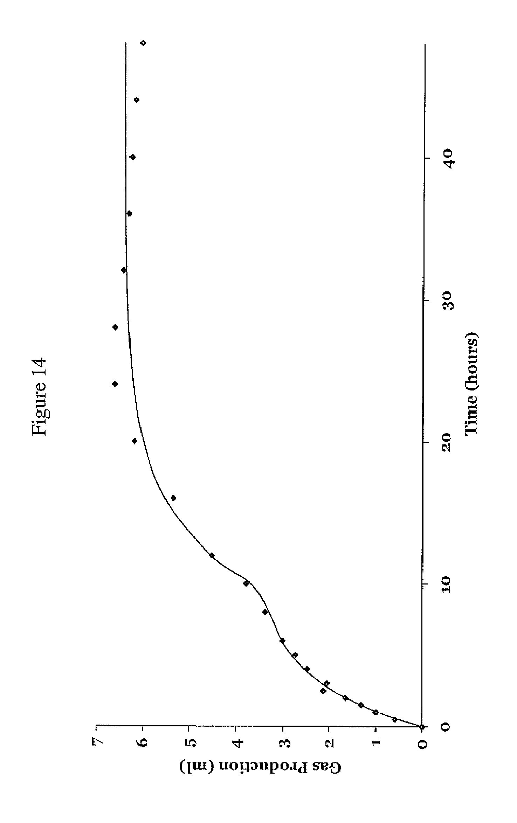

Further, and as illustrated in figures 13 and 14, degradation of alfalfa surprisingly generates far less gas compared to the amount of gas generated by soya bean meal degradation. Gas production results from the chemical conversion of acids generated upon fermentation of carbohydrates within soya bean meal and alfalfa. Lower gas production by alfalfa is an indication of the suitability of alfalfa as a source of protein and carbohydrates in ruminants. The low gas production is also surprising given that alfalfa proteins are also shown to be readily digestible.

Thus, figures 11 to 14 demonstrate the double benefit of alfalfa: readily available and digestible good quality protein which does not also result in large gas production. As gas production is a function of acids, low gas production points to a reduction in acidosis within the rumen. This effect makes the use of alfalfa particularly beneficial when used in the diets of high production animals. The diets of high production animals are associated with high carbohydrate degradation, large gas production and acidosis, which is harmful to the animal.

### Example 6

From the data provided in figures 11 to 14, mathematical modelling of the bypass effect of alfalfa compared to soya bean meal was conducted. The results, shown in table 2, illustrate that a higher percentage of alfalfa protein and carbohydrates bypass the rumen compared to the data for soya bean meal. The mathematical modelling data demonstrates that alfalfa also provides a good source of by-pass protein and carbohydrate.

### Example 7

2kg of alfalfa per 1 kg seaweed meal administered to a cattle herd where 25% of the herd were heifers (first lactation), 25% second lactation animals and 50% third lactation animals resulted in an increase in milk production in excess of 1 kg per head per day (data not shown).

### Example 8

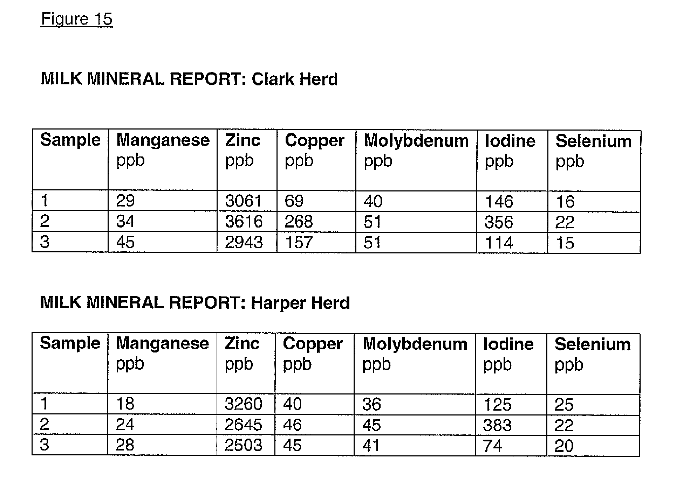

Figure 15 demonstrates the increase in milk trace mineral concentrations following administration of seaweed meal and further demonstrates a reduction in milk trace mineral concentrations following withdrawal of seaweed meal. The data demonstrates that compared to conventional mineral supplements, seaweed meal provide a source of more readily accessible minerals, as explained below.

The data in tables 4a and 4b below represent the mineral concentrations provided in artificial mineral supplements fed to herd cattle (herd of farms Black, Davidson, Sloan, Clark, Wilson and Harper) prior to the introduction of seaweed meal in the form of BIAGRO^{™}, a Hebridean seaweed meal product. Six farms in total were involved in the trial, representing a total of approximately 1000 animals.

Mineral concentration, calculated as a percentage of total dry matter fed to the animal (DM) and as a g/day dose per animal, are presented for each farm prior to the administration of seaweed meal when animals were fed artificial mineral supplements and silage prepared by each farm.

Each farm then halved the amount of mineral supplement fed to the herd, and replaced this with BIAGRO^{™}. Total mineral concentrations provided by the combination of a reduced artificial mineral supplement in combination with BIAGRO^{™}, is shown in Table 5. As shown in Table 6, overall mineral concentrations fed to the animal in artificial mineral supplement in combination with BIAGRO^{™} fell compared to the concentrations fed at the start of the trial, as shown in tables 4a and 4b, with the exception of iodine, which is highly concentrated in seaweed.

Table 7 shows the relative reduction in mineral concentrations administered to the herds after reducing artificial mineral supplements by half and introducing seaweed meal to feed.

Table 8 shows the average milk mineral concentrations in ppb and percentage terms after seaweed meal was removed from the animal's diet. Mineral concentrations were calculated on herds continuing to produce the same average daily milk production produced at the start of the trial.

Table 9 illustrates the change in mineral concentrations fed to the animal. As can be seen by comparing the data in table 9 with table 8, reducing the total amount of minerals fed to the herd during the trial did not reduce milk quality.
Samples were taken during the trial once seaweed meal and been removed from the feed. As shown in Table 10, milk sampled immediately after the removal of seaweed meal from the feed shows an improved somatic cell count, indicative of a more efficiently functioning immune system and reduced bacterial debris in milk. Milk yields and the number of days the herd was in milk also increased, which resulted in an insignificant drop in milk protein and butterfat commonly seen in herds with a longer lactating period.

Figure 15 shows representative data sets for two herds (Harper and Clark) following the trial described above. The Harper herd represents a low performance herd, and the Clark herd a high performance herd. The quantities measured in parts per billion for manganese, zinc, copper, selenium, iodine and molybdenum were assessed prior to administration of seaweed meal and the values are shown as sample 1.

In Figure 15, the Harper herd was fed 100g of artificial mineral supplements for a month at the start of trial. After a month this was halved and supplemented with 200g of seaweed meal. Sample 2 represents the mean milk mineral content for the herd during two months of the altered feed. Sample 3 demonstrates a fall in milk trace mineral concentrations one month after seaweed meal was no longer administered and the herd were turned out to grass with reduced artificial mineral supplements (50g). Bulk milk taken from the whole herd was assessed.

The Clark herd was fed 180g of artificial mineral supplement at the start of the trial which was halved to 90g during the trial and supplemented with 200g of seaweed meal.

Figure 15 clearly demonstrates a rise in milk concentrations of zinc, copper and iodine after administration of seaweed meal. Following withdrawal of seaweed meal, milk mineral trace concentrations fell. Similar results are also illustrated for manganese, molybdenum and selenium levels.

Thus, the data demonstrates the ability of seaweed meal to provide readily accessible minerals to the animal and to support animal output, function and health in a more efficient manner than artificial mineral supplements despite seaweed meal containing lower concentrations of minerals.

Table 9 compares mineral milk excretion pre trial and after seaweed meal was removed from the feed. Data is expressed in parts per billion. As can be seen, after the administration of seaweed meal, mineral milk content was analogous to that seen pre-trial, but the amount of minerals fed to the animal was reduced by approximately 50%. Excess minerals fed to the animals and not excreted in milk is excreted in faecal matter. Thus, the use of seaweed meal also provides an environmental benefit as it results in reduced mineral excretion from the animal onto the land. Increased soil mineral concentration leads to toxic levels of minerals in the environment which had hazardous consequences to plant and animal life.

The use of seaweed meal also leads to more effective extraction and utilisation of minerals from the rest of the ration or feed fed to the animal.

Modifications and deviations from the invention may be envisaged without departing from the scope of the invention. This invention also encompasses all combinations of alternative aspects of the invention noted herein. It is understood that any and all embodiments of the present invention may be taken in conjunction with any other embodiment to describe additional embodiments of the present invention. Furthermore, any elements of an embodiment may be combined with any and all other elements from any of the embodiments to describe additional embodiments.

**Table 1: analysis of seaweed meal**

| **Average Analysis** | | **Elemental analysis** | | | | **Amino Acid content** |
|---|---|---|---|---|---|---|
| | % | | **g/kg** | **g/g** | **mg in 200mg** | 20 different amino acids are present including 13 essential amino acids |
| Crude Protein | 6.9 | Calcium | 35.5 | 0.0355 | 7.1 | Alganine Arginine Aspartic acid Citruline Cystine Glycine Glutamic acid Histidine Isoleucine Leucine Lysine Methionine Ornithine Phenylalanine Proline Threonine Tyrosine Tryptophan Valine |
| Crude fat | 2.4 | Chlorine | 25 | 0.025 | 5 | |
| Nitrogen free extracts (carbohydrates) | 55-60 | Potassium | 26.78 | 0.02678 | 5.356 | |
| Ash | 26-28 | Nitrogen | 12.32 | 0.1232 | 2.464 | |
| Fibre-less than | 8 | Sodium | 20.4 | 0.204 | 4.08 | |
| Sand-less than | 0.5 | Phosphorous | 1.2 | 0.0012 | 0.24 | |
| | | sulphur | 29.6 | 0.0296 | 5.92 | |
| | **mg/kg** | | **mg/kg** | **mg/mg** | **Micrograms per 200mg** | |
| Provit A (beta carotene) | 40-65 | Silver | 0.5 | 0.0000005 | 0.1 | |
| Vit B1 | 6-8 | Aluminium | 350.0 | 0.00035 | 70 | |
| Vit B2 | 5-10 | Boron | 50.0 | 0.00005 | 10 | |
| Vit B12 | 0.004 | Cobalt | 5.0 | 0.000005 | 1 | |
| Vit C | 500-2000 | Chromium | 1.0 | 0.000001 | 0.2 | |
| Vit D | 4 | Copper | 7.5 | 0.0000075 | 1.5 | |
| Vit E | 100-200 | Iron | 713.0 | 0.000713 | 142.3 | |
| Folic Acid | 0.2 | Iodine | 835.0 | 0.000835 | 167 | |
| Niacin | 10-30 | Magnesium | 880.0 | 0.00055 | 176 | |
| Pantothenic acid | 3 | Manganese | 164.0 | 0.000164 | 32.8 | |
| | | Molybdenum | 0.5 | 0.0000005 | 0.1 | |
| | | Nickel | 3.5 | 0.0000035 | 0.7 | |
| | | Lead | 0.25 | 0.00000025 | 0.05 | |
| | | Selenium | 0.9 | 0.0000009 | 0.18 | |
| | | zinc | 51.0 | 0.000051 | 10.2 | |

**Table 2a: Mathematical modelling of soluble alfalfa protein**

| Sample | Crude Protein (g/kg) | Liquid passage rate | A fraction Quick fraction | Frac/hr utilisation A rate | Fraction rumen utilised | Fraction bypassed | Bypassed protein (DUP) | Rumen (RDP) | Total protein utilised (g) |
|---|---|---|---|---|---|---|---|---|---|
| Alfalfa | 550 | 0.15 | 0.27 | 0.232 | 0.60733 | 0.39267 | 58.31152 | 90.18848 | 148.5 |
| Soya bean meal | 473 | 0.15 | 0.17 | 0.253 | 0. 627792 | 0.372208 | 29.92928 | 50.48072 | 80.4 |

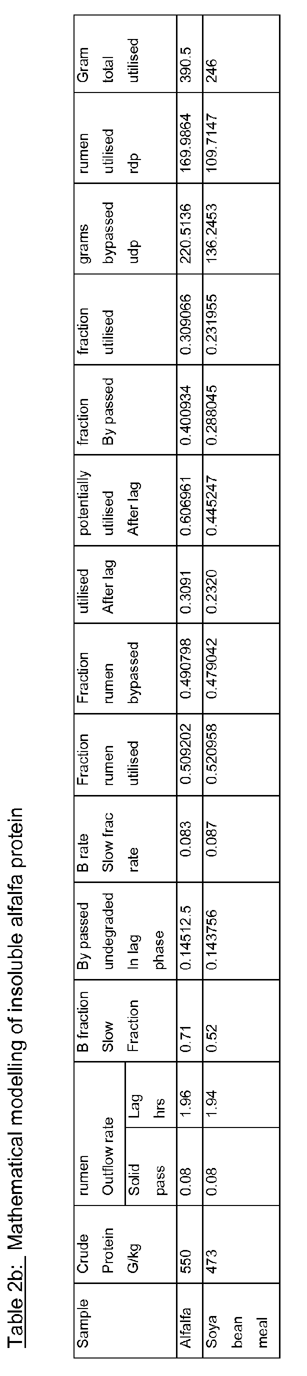

**Table 3a : Mathematical Modelling of alfalfa soluble carbohydrate (CHO) degradation**

| Samples | **CHO** (g/kg) | **Liquid passage** rate | A fraction QUICK fraction | **Frac/hr** utilisation a rate | fraction rumen utilised | fraction rumen by passed | bypass gram carbohydrates | rumen grams carbohydrate | gram total utilised | Rumen quick Carbohydrates | rumen Slow Carbohydrates |
|---|---|---|---|---|---|---|---|---|---|---|---|
| Alfalfa | 319 | 0.15 | 0.143574 | 0.3 | 0.666667 | 0.333333 | 15.26667 | 30.53333 | 45.8 | 45.8 | 31.2 |
| Soy bean meal | 448 | 0.15 | 0.701116 | 0.22 | 0.594595 | 0.405405 | 127.3378 | 186.7622 | 314.1 | 314.1 | 133.9 |

**Table 3b: insoluble carbohydrate (CHO) degradation**

| Sample | CHO (g/Kg) | Rumen outflow Solid phase | B fraction | Bypass undegraded in lag phase | B rate (slow rate) | Remainder potentially utilised | Fraction rumen utilised | Fraction rumen bypassed | Fraction bypassed | Fraction utilised | Grams CHO bypassed udCHO | Total CHO utilised (g) |
|---|---|---|---|---|---|---|---|---|---|---|---|---|
| Alfalfa | 319 | 0.08 | 0.097806 | 0.527444 | 0.184 | 0.472556 | 0.69697 | 0.30303 | 0.065593 | 0.0322213 | 10.27593 | 31.2 |
| Soya bean meal | 448 | 0.08 | 0.298884 | 0.431526 | 0.136 | 0.568474 | 0.62963 | 0.37037 | 0.191905 | .0106979 | 47.92655 | 133.9 |

**Table 4a: mean values of Pre-trial mineral concentrations provided in artificial mineral supplements compared to mineral concentrations provided in 200g of Hebridean and Seaquim seaweed meals in percentage terms**

| g/day | 200 | 200 | 200 | 180 | 200 | 180 | 200 | 100 | |
|---|---|---|---|---|---|---|---|---|---|
| **Client** | **Hebridean** | **Seaquim** | **Black** | **Davidson** | **Sloan** | **Clark** | **Wilson** | **Harper** | **Mean** |
| g/day | 200 | 200 | 200 | 180 | 200 | 180 | 200 | 100 | |
| Ca %DM | 1.27 | 3.55 | 13 | 12.77 | 12.53 | 17 | 18.5 | 15 | 15 |
| Na %DM | 2.74 | 2.04 | 7.6 | 8 | 7.2 | 6 | 7.5 | 5 | 7 |
| P%DM | 0.1 | 0.12 | 8 | 9.6 | 8 | 8 | 10 | 10 | 9 |
| Mg %DM | 0.8 | 0.088 | 10 | 5 | 10 | 8 | 8 | 10 | 9 |
| Co mg/kg | 1.81 | 5 | 80 | 150 | | 200 | 80 | 200 | 142 |
| Cu mg/kg | 16.2 | 7.5 | 3000 | 3000 | 300 | 2500 | 3000 | 2100 | 2317 |
| 1 mg/kg | 835 | 835 | 600 | 800 | | 300 | 500 | 400 | 520 |
| Mn mg/kg | 63.93 | 164 | 6000 | 6750 | | 4000 | 3000 | 2000 | 4350 |
| Se mg/kg | 0.11 | 0.9 | 40 | 50 | | 30 | 30 | 20 | 34 |
| Zn mg/kg | 104.41 | 51 | 6000 | 9000 | | 6000 | 4000 | 9000 | 6800 |
| Average annual milk production | | | 9000 | 7634 | 9500 | 6930 | 9000 | 7000 | |
| Average daily milk production | | | 29.5082 | 25.02951 | 31.14754 | 22.72131 | 29.5082 | 22.95082 | |

**Table 4b: : mean values of Pre-trial mineral concentrations provided in artificial mineral supplements compared to mineral concentrations provided in 200g of Hebridean and Seaquim seaweed meals**

| **daily dose** | **Hebridean** | **Seaquim** | **Black** | **Davidson** | **Sloan** | **Clark** | **Wilson** | **Harper** | **Mean** | **trial change kvalues** |
|---|---|---|---|---|---|---|---|---|---|---|
| Ca g | 2.54 | 7.1 | 26 | 22.986 | 25.06 | 30.6 | 37 | 15 | 26 | 0.5 |
| Na g | 5.48 | 4.08 | 15.2 | 14.4 | 14.4 | 10.8 | 15 | 5 | 12 | 0.5 |
| P g | 0.2 | 0.24 | 16 | 17.28 | 16 | 14.4 | 20 | 10 | 16 | 0.5 |
| Mg g | 1.6 | 0.176 | 20 | 9 | 20 | 14.4 | 16 | 10 | 15 | 0.5 |
| Co mg | 0.362 | 1 | 16 | 27 | | 36 | 16 | 20 | 23 | 0.5 |
| Cu mg | 3.24 | 1.5 | 600 | 540 | 60 | 450 | 600 | 210 | 410 | 0.5 |
| 1 mg | 167 | 167 | 120 | 144 | | 54 | 100 | 40 | 91.6 | 0.5 |
| Mn mg | 12.786 | 32.8 | 1200 | 1215 | | 720 | 600 | 200 | 787 | 0.5 |
| Se mg | 0.022 | 0.18 | 8 | 9 | | 5.4 | 6 | 2 | 6 | 0.5 |
| Zn mg | 20.882 | 10.2 | 1200 | 1620 | | 1080 | 800 | 900 | 1120 | 0.5 |

**Table 5: Mineral doses**

| **BIAGROW daily dose** | **daily dose** | **Black** | **Davidson** | **Sloan** | **Clark** | **Wilson** | **Harper** | **Mean** |
|---|---|---|---|---|---|---|---|---|
| 2.54 | Ca g | 15.54 | 14.033 | 15.07 | 17.84 | 21.04 | 10.04 | 16 |
| 5.48 | Na g | 13.08 | 12.68 | 12.68 | 10.88 | 12.98 | 7.98 | 12 |
| 0.2 | P g | 8.2 | 8.84 | 8.2 | 7.4 | 10.2 | 5.2 | 8 |
| 1.6 | Mg g | 11.6 | 6.1 | 11.6 | 8.8 | 9.6 | 6.6 | 9 |
| 0.362 | Co mg | 8.362 | 13.862 | | 18.362 | 8.362 | 10.362 | 12 |
| 3.24 | Cu mg | 303.24 | 273.24 | 33.24 | 228.24 | 303.24 | 108.24 | 208 |
| 167 | 1 mg | 227 | 239 | | 194 | 217 | 187 | 213 |
| 12.786 | Mn mg | 612.786 | 620.286 | | 372.786 | 312.786 | 112.786 | 406 |
| 0.022 | Se mg | 4.022 | 4.522 | | 2.722 | 3.022 | 1.022 | 3 |
| 20.882 | Zn mg | 620.882 | 830.882 | | 560.882 | 420.882 | 470.882 | 581 |

**Table 6a: Pre-trial mineral concentrations fed to the animal minus mineral concentrations fed to the animal during the trial with halved artificial mineral supplements combined with seaweed meal.**

| **Change** | **Black** | **Davidson** | **Sloan** | **Clark** | **Wilson** | **Harper** | **Mean** |
|---|---|---|---|---|---|---|---|
| Ca g | -10.46 | -8.953 | -9.99 | -12.76 | -15.96 | -4.96 | -10.51 |
| Na g | -2.12 | -1.72 | -1.72 | 0.08 | -2.02 | 2.98 | -0.75 |
| P g | -7.8 | -8.44 | -7.8 | -7 | -9.8 | -4.8 | -7.61 |
| Mg g | -8.4 | -2.9 | -8.4 | -5.6 | -6.4 | -3.4 | -5.85 |
| Co mg | -7.64 | -13.14 | | -17.64 | -7.64 | -9.64 | -11.14 |
| Cu mg | -296.76 | -266.76 | -26.76 | -221.76 | -296.76 | -101.76 | -201.76 |
| 1 mg | 107 | 95 | | 140 | 117 | 147 | 121.2 |
| Mn mg | -587.21 | -594.72 | | -347.21 | -287.21 | -87.214 | -380.71 |
| Se mg | -3.98 | -4.48 | | -2.68 | -2.98 | -0.98 | -3.02 |
| Zn mg | -579.12 | -789.12 | | -519.12 | -379.12 | -429.12 | -539.12 |

| **Change%** | **Black** | **Davidson** | **Sloan** | **Clark** | **Wilson** | **Harper** | **Mean%** |
|---|---|---|---|---|---|---|---|
| Ca g | -40.23 | -38.95 | -39.86 | -41.7 | -43.14 | -33.07 | -40 |
| Na g | -13.95 | -11.94 | -11.94 | 0.74 | -13.47 | 59.6 | -6 |
| P g | -48.75 | -48.84 | -48.75 | -48.611 | -49 | -49 | -49 |
| Mg g | -42 | -32.22 | -42 | -38.89 | -40 | -34 | -39 |
| Co mg | -47.74 | -48.66 | | -38.89 | -47.74 | -48.19 | -48 |
| Cu mg | -0.4946 | -49.4 | -44.6 | -48.99 | -49.46 | -48.46 | -49 |
| 1 mg | 89.17 | 65.97 | | 259.26 | 117 | 367.5 | 132 |
| Mn mg | -48.93 | -48.95 | | -48.22 | -47.87 | -43.61 | -48 |
| Se mg | -49.73 | -49.76 | | -49.59 | -49.63 | -48.9 | -50 |
| Zn mg | -48.26 | -48.71 | | -48.07 | -47.39 | -47.68 | -48 |

**Table 7: Relative reduction in mineral concentrations administered during the trial**

| **Differences (during trial-before trial)** | | | | | | | |
|---|---|---|---|---|---|---|---|
| | **Black** | **Davidson** | **Sloan** | **Clark** | **Wilson** | **Harper** | **Mean** |
| Mn | -622 | -594 | | -527 | -226 | -211 | -432 |
| Zn | -7 | -9 | | -7 | -4 | -6 | -7 |
| Cu | -183 | -132 | -16 | -141 | -144 | -111 | -122 |
| 1 | 19 | 17 | | 42 | 11 | 51 | 22 |
| Se | -6 | -9 | | -7 | -5 | -2 | -5 |

| **Percentage differences (during trial -before trial)/(before trial)** | | | | | | | |
|---|---|---|---|---|---|---|---|
| | **Black** | **Davidson** | **Sloan** | **Clark** | **Wilson** | **Harper** | **Mean** |
| Mn | -48.9 | -48.9 | | -48.2 | -47.9 | -43.6 | -47.5 |
| Zn | -48.3 | -48.7 | | -48.1 | -47.4 | -47.7 | -48 |
| Cu | -49.5 | -49.4 | -44.6 | -49.3 | -49.5 | -48.5 | -48.4 |
| 1 | 89.2 | 66 | | 259.3 | 117 | 367.5 | 179.8 |
| Se | -49.7 | -49.8 | | -49.6 | -49.6 | -48.9 | -49.5 |

**Table 8: milk mineral contents after seaweed meal administration**

| **Milk analysis results** | | | **Black** | **Davidson** | **Sloan** | **Clark** | **Wilson** | **Harper** | **Mean** |
|---|---|---|---|---|---|---|---|---|---|
| **Average Milk Production** | | litres | 30 | 25 | 31 | 23 | 30 | 23 | 26.81 |
| | ppb | Mn | 32 | 40 | 35 | 29 | 43 | 18 | 33 |
| | ppb | Zn | 2997 | 3462 | 2874 | 3061 | 2904 | 3260 | 3093 |
| | ppb | Cu | 55 | 81 | 55 | 69 | 70 | 40 | 62 |
| | ppb | Mo | 39 | 39 | 38 | 40 | 35 | 36 | 38 |
| | ppb | 1 | 187 | 230 | 194 | 146 | 347 | 125 | 205 |
| | ppb | Se | 23 | 19 | 22 | 16 | 19 | 25 | 21 |

| **Average milk excretion** | | | **Black** | **Davidson** | **Sloan** | **Clark** | **Wilson** | **Harper** | **Mean** |
|---|---|---|---|---|---|---|---|---|---|
| | mg/day | Mn | 0.94 | 1 | 1.09 | 0.66 | 1.27 | 0.41 | 0.88 |
| | mg/day | Zn | 88.44 | 86.65 | 89.52 | 69.55 | 85.69 | 74.82 | 82.93 |
| | mg/day | Cu | 1.62 | 2.03 | 1.71 | 1.57 | 2.07 | 0.92 | 1.65 |
| | mg/day | Mo | 1.15 | 0.98 | 1.18 | 0.91 | 1.03 | 0.83 | 1.01 |
| | mg/day | 1 | 5.52 | 5.76 | 6.04 | 3.32 | 10.24 | 2.87 | 5.49 |
| | mg/day | Se | 0.68 | 0.48 | 0.69 | 0.36 | 0.56 | 0.57 | 0.55 |

**Table 9: relative amounts of minerals fed before and during administration of seaweed meal**

| **Trial cover as a multipla of daily supplement over milk excretion ignoring other dietary sources of intake** | | | | | | | | | |
|---|---|---|---|---|---|---|---|---|---|
| | | | **Black** | **Davidson** | **Sloan** | **Clark** | **Wilson** | **Harper** | **Mean** |
| | | Mn | 649 | 620 | | 566 | 247 | 273 | 462 |
| | | Zn | 7 | 10 | | 8 | 5 | 6 | 7 |
| | | Cu | 187 | 135 | 19 | 146 | 147 | 118 | 126 |
| | | 1 | 41 | 42 | | 58 | 21 | 65 | 39 |
| | | Se | 6 | 10 | | 7 | 5 | 2 | 6 |

| **Pre trial cover as a multiple of daily supplement over milk excretion ignoring other dietary sources** | | | | | | | | | |
|---|---|---|---|---|---|---|---|---|---|
| | | | **Black** | **Davidson** | **Sloan** | **Clark** | **Wilson** | **Harper** | **Mean** |
| | | Mn | 1271 | 1214 | | 1093 | 473 | 484 | 894 |
| | | Zn | 14 | 19 | | 16 | 9 | 12 | 14 |
| | | Cu | 370 | 266 | 35 | 287 | 290 | 229 | 248 |
| | | 1 | 22 | 25 | | 16 | 10 | 14 | 17 |
| | | Se | 12 | 19 | | 15 | 11 | 3 | 11 |

**Table 10: Effects of seaweed meal**

| **Quality indicators** | | **Before** | **End** | **%difference** |
|---|---|---|---|---|
| Somatic cell count | SSC 000 | 212 | 187 | -11 |
| Butterfat yield | Milk fat% | 4.18 | 4.08 | -3 |
| Protein yield | Milk Protein % | 3.29 | 3.27 | -1 |
| increased milk | Yield Kg/day | 25.4 | 26.3 | 3 |
| average days in milk | Days in milk | 188 | 197 | 5 |

## Claims

1. A method of enhancing nutrient digestion and utilisation by a ruminant comprising orally administering seaweed meal to the ruminant.

2. A method of enhancing milk yield in a ruminant comprising orally administering seaweed meal to the ruminant.

3. A method of improving the percentage weight composition of protein in milk produced by a ruminant comprising orally administering seaweed meal to the ruminant

4. A method of extending the lactation lifespan of a ruminant comprising orally administering seaweed meal to the ruminant.

5. A method of increasing animal productivity in a ruminant comprising orally administering seaweed meal to the ruminant.

6. A method of increasing the fertility rate of a ruminant comprising orally administrating seaweed meal to the ruminant.

7. A method as claimed in any preceding claim wherein the seaweed meal is administered in a feeding regime further comprising alfalfa.

8. A method as claimed in any preceding claim wherein the oral administration of seaweed meal to the ruminant does result in the pH of the rumen falling below about pH6.2.

9. A composition comprising seaweed meal and alfalfa.

10. A foodstuff composition comprising seaweed meal and alfalfa.

11. A composition as claimed in claim 9 or 10, wherein the composition comprises at least 10% by weight of seaweed meal, and/or at least 10% by weight of alfalfa.

12. A method as claimed in claim 8 wherein the method comprises administering the composition of any one of claims 9 to 11.

13. The non therapeutic use of seaweed meal, seaweed meal and alfalfa, or the composition of any one of claims 9 to 11, as a source of by-pass protein and/or by-pass carbohydrate to improve the uptake and utilisation of nutrients by a ruminant.

14. The non-therapeutic use of seaweed meal, seaweed meal and alfalfa or the composition of any one of claims 9 to 11 for the enhancement of milk production per day by a ruminant.

15. The method of any one of claims 1 to 8, or the use of claim 13 or claim 14, wherein administration of seaweed meal to a ruminant reduces ruminant faecal mineral excretion.
